(19) Europäisches Patentamt
European Patent Office
Office européen des brevets

(11) **EP 2 101 547 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(51) Int Cl.:
*H05B 6/80* (2006.01)     *F27B 17/02* (2006.01)
*A61C 13/20* (2006.01)

(21) Anmeldenummer: **08102475.4**

(22) Anmeldetag: **11.03.2008**

(54) **Dental-Sinterofen sowie Verfahren zum Sintern keramischer Dental-Elemente**

Dental sintering furnace and method for sintering ceramic dental elements

*Four de frittage dentaire et procédé de frittage d'éléments dentaires céramiques*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**16.09.2009 Patentblatt 2009/38**

(73) Patentinhaber: **Vita Zahnfabrik H. Rauter GmbH & Co. KG**
**79713 Bad Säckingen (DE)**

(72) Erfinder:
• **Stephan, Marc**
**79534 Lörrach (DE)**

• **Mallah, Marcel**
**31226 Peine (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 1 060 713      DE-A1- 19 654 356**
**US-A- 5 420 401      US-A- 5 538 699**
**US-A1- 2007 023 971**

**Beschreibung**

Die Erfindung betrifft einen Dental-Sinterofen sowie ein Verfahren zum Sintern keramischer Dental-Elemente, insbesondere unter Verwendung des Dental-Sinterofens.

Dental-Elemente, wie Kronen- und Bruckengeruste und dergleichen werden häufig aus Keramik hergestellt. Bei den verwendeten Materialen handelt es sich insbesondere um Dentalkeramik, wie Zirkoniumdioxid, Aluminiumoxid, Kombination aus Aluminiumoxid und Zirkoniumdioxid sowie glasinfiltrierte Aluminium- und Zirkoniumdioxide.

Zur Herstellung der Dental-Elemente aus Zirkoniumdioxid ist es bekannt, diese zu sintern. Dies erfolgt dadurch, dass das Dental-Element hohen Temperaturen von ca. 1500°C uber einen langen Prozesszeitraum von häufig 5 - 10 Stunden ausgesetzt wird. Um ein Beschädigen und ungleichmäßiges Schrumpfen der Dental-Elemente zu vermeiden, muss eine möglichst gleichmäßige Erwärmung der Dental-Elemente erfolgen. Hierzu ist es bekannt, Dental-Elemente in einem Sinterofen anzuordnen, der eine konventionelle Heizeinrichtung, bei der es sich üblicherweise um eine elektrische Heizeinrichtung handelt, aufweist. Die Erwärmung der in einem Aufnahmeraum aufgenommenen zu sinternden Dental-Elemente erfolgt somit konventionell durch Wärmestrahlung und/ oder Konvektion.

Ferner ist es beispielsweise aus EP 07 13 633 bekannt, zusätzlich zu einer konventionellen Heizeinrichtung eine Erwärmung von keramischen Bauteilen durch Mikrowellen vorzunehmen. Hierbei erfolgt die Erwärmung eines Aufnahmeraums gleichzeitig über eine konventionelle Heizeinrichtung in Form einer elektrischen Heizung und einer Mikrowelle. Die zur Erwärmung dienenden Heizelemente sind innerhalb des Aufnahmeraums angeordnet. Ferner werden in dem Aufnahmeraum Mikrowellen eingekoppelt. Da sich die Mikrowellen in dem Aufnahmeraum inhomogen ausbreiten, ist es bei der hier beschriebenen Vorrichtung erforderlich, einen Mikrowellenrührer vorzusehen. Trotz des Vorsehens eines derartigen Mikrowellenrührers ist das Mikrowellenfeld innerhalb des Aufnahmeraums nicht homogen. Dies führt zu einer ungleichmäßigen Erwärmung der keramischen Bauteile. Insbesondere können partielle Überhitzungen der Bauteile auftreten. Dies führt zur Beschädigung oder sogar Zerstörung der Bauteile. Da die Qualitätsanforderungen an keramische Dental-Elemente, insbesondere hinsichtlich der Abmessungen und der Gleichmäßigkeit der Materialbeschaffenheit über den gesamten Querschnitt äußerst hoch sind, ist die in EP 07 13 633 beschriebene Vorrichtung zur Herstellung qualitativ hochwertiger keramischer Dental-Elemente nicht geeignet. Ein weiterer Nachteil der in EP 07 13 633 beschriebenen Vorrichtung besteht darin, dass die innerhalb des Aufnahmeraums angeordneten Heizelemente die Homogenität der Mikrowellen stark beeinträchtigen.

Ferner ist aus US 2007/023971 ein ähnlicher Dental-Sinterofen bekannt. Dieser weist einen Aufnahmeraum zur Aufnahme der zu sinternden Dental-Elemente auf. Ferner ist eine Heizeinrichtung zur Erwärmung der in dem Aufnahmeraum angeordneten Dental-Elemente auf eine Vor-Sintertemperatur vorgesehen. Des Weiteren ist der Aufnahmeraum mit einem Mikrowellengenerator verbunden.

Aufgabe der Erfindung ist es, einen Dental-Sinterofen zu schaffen, mit dem keramische Dental-Elemente hoher Qualität hergestellt werden können. Ferner ist es Aufgabe der Erfindung ein entsprechendes Verfahren zum Sintern keramischer Dental-Elemente bereitzustellen.

Die Lösung der Aufgabe erfolgt durch einen Dental-Sinterofen gemäß Anspruch 1 bzw. ein Verfahren zum Sintern keramischer Dental-Elemente gemäß Anspruch 6.

Der erfindungsgemäße Dental-Sinterofen zum Sintern keramischer Dental-Elemente, wie Kronen- und Brückengerüsten und dergleichen weist einen vorzugsweise zylindrisch, insbesondere kreiszylindrisch ausgebildeten Aufnahmeraum zur Aufnahme der zu sinternden Dental-Elemente auf. Die keramischen Dental-Elemente weisen vorzugsweise Zirkoniumdioxid auf und bestehen in besonders bevorzugter Ausführungsform vollständig aus Zirkoniumdioxid. Ferner ist eine insbesondere konventionelle Heizeinrichtung zur Erwärmung der in dem Aufnahmeraum angeordneten Dental-Elemente vorgesehen. Mit Hilfe der Heizeinrichtung erfolgt insbesondere über Wärmestrahlung gegebenenfalls aber auch über Konvektion ein Erwärmen der Dental-Elemente auf eine Vor-Sintertemperatur. Hierbei handelt es sich insbesondere um eine Temperatur von ca. 800 - 1100°C. Vorzugsweise ist die Heizeinrichtung außerhalb des Aufnahmeraums angeordnet und umgibt diesen vorzugsweise zumindest teilweise. Gegebenenfalls können einzelne Heizelemente, wie Heizspiralen in insbesondere regelmäßigen Abständen um den Aufnahmeraum herum angeordnet sein. Zusätzlich zu einer insbesondere konventionellen Heizeinrichtung ist ein Mikrowellengenerator vorgesehen. Der Mikrowellengenerator ist mit einem Mikrowellen-Leiter verbunden, der den Aufnahmeraum zumindest teilweise, vorzugsweise vollständig umgibt. Der Mikrowellen-Leiter, in dem die von einem Mikrowellengenerator erzeugten Mikrowellen eingeleitet werden, weist mehrere Auskoppelelemente auf. Die Auskoppelelemente dienen zum Auskoppeln von Mikrowellen in Richtung des Aufnahmeraums. Vorzugsweise sind die Auskoppelelemente derart ausgebildet, dass sie entsprechend eigener Mikrowellenquellen bzw. Mikrowellenantennen wirken. Die einzelnen Auskoppelelemente sind vorzugsweise derart um den Aufnahmeraum herum angeordnet, dass innerhalb des Aufnahmeraums ein hoch homogenes Mikrowellenfeld entsteht.

Erfindungsgemäß ist der Aufnahmeraum zumindest teilweise von einem Mikrowellenleiter umgeben, der mehrere Auskoppelelemente zum Auskoppeln von Mikrowellen in Richtung des Aufnahmeraums aufweist.

Hierbei weisen die Auskopplungselemente an einer in Richtung des Aufnahmeraums weisenden Innenwand des Mikrowellen-Leiters Auskoppelschlitze auf. Ferner weist zumindest ein Teil der Auskoppelemente eine Einstelleinrichtung auf, um die Intensität und/ oder Ausbreitungsrichtung der Mikrowelle einzustellen.

Aufgrund des äußerst homogenen Mikrowellenfeldes ist es möglich, innerhalb des Aufnahmeraums mehrere Dental-Elemente gleichzeitig zu sintern. Ferner ist es aufgrund der Kombination einer insbesondere konventionellen Heizeinrichtung mit einem Mikrowellengenerator, der aufgrund des Vorsehens mehrere Auskoppelelemente ein äußerst homogenes Mikrowellenfeld innerhalb des Aufnahmeraums erzeugt möglich, die Sinterzeit deutlich zu reduzieren. Insbesondere kann die Sinterzeit durch Verwendung des erfindungsgemäßen Dental-Sinterofens um mehr als 50%, insbesondere um mehr als 70% reduziert werden.

Die mit dem Mikrowellen-Leiter verbundenen bzw. durch diesen ausgebildeten Auskoppelelemente sind vorzugsweise gleichmäßig um den Aufnahmeraum herum angeordnet. Bei einem beispielsweise kreiszylindrischen Aufnahmehohlraum sind die Auskoppelelemente entlang des Umfangs in konstanten Abständen angeordnet. Hierbei ist es beispielsweise möglich, die Auskoppelelemente in Umfangsrichtung versetzt zu einzelnen Heizelementen, wie Heizstäben oder Heizspiralen der Heizeinrichtung anzuordnen, um die Störung der Mikrowellen durch die Heizeinrichtung zu verringern. Hierbei ist der Mikrowellen-Leiter vorzugsweise ringförmig, insbesondere kreisringförmig ausgebildet und umgibt den Aufnahmeraum vollständig. Der Mikrowellen-Leiter ist vorzugsweise als Hohlleiter ausgebildet, so dass sich die Mikrowellen innerhalb des Hohlleiters ausbreiten können, wobei das Material des Hohlleiters derart gewählt ist, dass ein Austreten der Mikrowelle durch die Wandungen des Hohlleiters vermieden ist. Insbesondere ist der Hohlleiter aus Aluminium oder Edelstahl. Der Querschnitt des Hohlleiters ist vorzugsweise rechteckig.

Um ein möglichst homogenes Mikrowellenfeld innerhalb des Aufnahmeraums zu erzeugen, sind die Auskoppelelemente an einer in Richtung des Aufnahmeraums weisenden Innenwand des Mikrowellen-Leiters angeordnet. In besonders bevorzugter Ausführungsform weisen die Auskoppelelemente Auskoppelschlitze auf, die an der Innenwand des Mikrowellen-Leiters vorgesehen sind. Besonders bevorzugt ist es, die mehreren Schlitze bei einem kreisringförmigen Hohlleiter gleichmäßig am Umfang verteilt anzuordnen. Ferner ist es zur Erzielung eines möglichst homogenen Magnetfelds vorteilhaft, dass die Schlitze bezogen auf die Umfangsrichtung des Mikrowellen-Leiters geneigt sind. Bezüglich der Umfangsrichtung weisen die Schlitze vorzugsweise eine Neigung von 10° - 15° auf. Der Neigungswinkel $\alpha$ errechnet sich vorzugsweise nach der Gleichung

$$\sin^2 \alpha = \frac{1,22}{2n+1},$$

wobei n die Anzahl der Schlitze ist. Vorzugsweise sind die Auskoppelschlitze abwechselnd steigend und fallend geneigt.

Bei einer weiteren bevorzugten Ausführungsform der Erfindung weist zumindest ein Teil der Auskoppelelemente eine Einstelleinrichtung zur Einstellung der Intensität und/ oder Ausbreitungsrichtung der Mikrowelle an dem entsprechenden Auskoppelelement auf. Beispielsweise kann durch die Einstelleinrichtung die Schlitzbreite, die Schlitzlänge und/ oder der Neigungswinkel verändert werden. Besonders bevorzugt ist es, dass die Einstelleinrichtung ein stabförmiges Element aufweist. Durch ein insbesondere aus Metall hergestelltes stabförmiges Element kann die Ausbreitungsrichtung und/ oder die Intensität der Mikrowellen beeinflusst werden. Vorzugsweise ist der Stab senkrecht zu dem Auskoppelschlitz angeordnet und weist besonders bevorzugt in Richtung des Aufnahmeraums. Bei einem kreiszylindrischen Aufnahmeraum ist der Stab somit in radialer Richtung angeordnet. Besonders bevorzugt ist es hierbei, dass die Lage der insbesondere stabförmigen Einstelleinrichtung veränderbar ist. Vorzugsweise ist das insbesondere stabförmige Element zur Abstandsveränderung relativ zu dem Auskoppelschlitz verschieb- und/ oder verschwenkbar angeordnet. Hierbei ist es besonders bevorzugt, dass der Stab an einer der Innenwand des Mikrowellen-Leiters gegenüberliegenden Außenwand verschiebbar gehalten ist.

Ferner betrifft die Erfindung ein Verfahren zum Sintern keramischer Dental-Elemente, das vorzugsweise unter Verwendung des vorstehend beschriebenen Dental-Sinterofens ausgeführt wird. Erfindungsgemäß werden die in dem Aufnahmeraum angeordneten Dental-Elemente über eine insbesondere konventionelle Heizeinrichtung, wie eine elektrische Heizeinrichtung auf eine Vor-Sintertemperatur erwärmt. Die Temperatur beträgt üblicherweise 800 - 1100°C. Erfindungsgemäß werden die auf Vor-Sintertemperatur erwärmten Dental-Elemente mit Mikrowellenstrahlung bestrahlt, um ein Erwärmen der Dental-Elemente auf Sintertemperatur zu erreichen. Hierbei erfolgt die Bestrahlung der Dental-Elemente mit einem möglichst hoch-homogenen Mikrowellenfeld, das vorzugsweise durch den vorstehend beschriebenen Dental-Sinterofen erzeugt wird.

Bei dem erfindungsgemäßen Verfahren ist vorzugsweise eine temperaturgesteuerte Leistungsregelung der konventionellen Heizeinrichtung vorgesehen. Eine temperaturgesteuerte Mikrowelleneinstrahlung ist nicht erforderlich. Besonders bevorzugt ist es, die Steuerung eines die Mikrowellenstrahlung erzeugenden Mikrowellengenerators ausschließlich mittels eines oder mehrerer Zeitprofile vorzunehmen. Eine aufwändige Temperaturmessung an den Dental-Elementen ist somit während des Sinters der Dental-Elemente nicht erforderlich. Vielmehr ist es erfindungsgemäß ausreichend, das Zeitprofil zur Erzielung der Vor-Sintertemperatur zu bestimmen und abzuspeichern. Erfindungsgemäß erfolgt somit nach Erreichen der Vor-Sintertemperatur, d.h. vorzugsweise nach Ablauf eines entsprechenden Zeitprofils ein Bestrahlen der Dental-Elemente mit Mikrowellen. Erfindungsgemäß sind hierbei vorzugsweise Zeitspannen von 5 - 60 Minuten ausreichend.

Zur Steuerung der vorzugsweise konventionellen Heizung ist in bevorzugter Ausführungsform ein Thermoelement bzw. ein Temperatursensor in dem Aufnahmeraum bzw. Ofenkammer angeordnet. Während des Sinterprozesses wird die durch die Heizeinrichtung erzielte Temperatur über die gesamte Haltezeit vorzugsweise konstant gehalten. Hierbei kann der durch die insbesondere konventionelle Heizung zu erzielende Zieltemperatur durchaus auch deutlich über einer Vor-Sintertemperatur von 800 - 1100°C liegen.

Um ein kontrolliertes Sintern der Dental-Elemente zu erreichen, ist es besonders bevorzugt, dass die Mikrowellenstrahlung erst ab Erreichen der Vor-Sintertemperatur von vorzugsweise 800 - 1100°C eingeschaltet wird. Die Mikrowellenstrahlung trifft somit nur auf entsprechend vorgewärmte Dentalelemente. Hierdurch kann eine äußerst homogene Werkstoffstruktur erzielt werden.

Nachfolgend wird die Erfindung anhand einer bevorzugten Ausführungsform unter Bezugnahme auf die anliegenden Zeichnungen näher erläutert.

Es zeigen:

Figur 1     eine schematische Schnittansicht eines Dental-Sinterofens,

Figur 2     eine schematische perspektivische Ansicht eines Mikrowellen-Leiters,

Figur 3     eine schematische Schnittansicht des Mikrowellen-Leiters quer zur Umfangsrichtung und

Figur 4     eine schematische Schnittansicht in Richtung der Linie IV - IV in Figur 3.

Der Dental-Sinterofen weist einen Aufnahmeraum 10 auf, in dem auf einem beispielsweise innerhalb des Aufnahmeraums angeordneten Auflageelement 12 mehrere zu sinternde Dental-Elemente 14 angeordnet sind. Der Aufnahmeraum 10 ist im dargestellten Ausführungsbeispiel durch ein zylindrisches Gehäuse 16 ausgebildet, das durch einen Deckel 18 und einen Boden 20 verschließbar ist. An der in Richtung des Aufnahmeraums 10 weisenden Seiten sowie des Deckels 18 und des Bodens 20 sind jeweils Isolierelemente 22 vorgesehen, die ein Austreten von Mikrowellen aus dem Aufnahmeraum 10 vermeiden.

Innerhalb des Gehäuses 16 ist ein gegebenenfalls mehrere um den Umfang des Aufnahmeraums verteilt angeordnete Heizelemente aufweisende Heizeinrichtung 24 angeordnet. Bei der Heizeinrichtung 24 handelt es sich insbesondere um eine über eine Leitung 26 mit einer Steuereinrichtung verbundene elektrische Heizung. Das Gehäuse 16 ist ferner von einer Hochtemperaturisolierung 28 umgeben, so dass die von der Heizeinrichtung 24 erzeugte Wärme nicht nach außen abgestrahlt wird.

Erfindungsgemäß ist das Gehäuse 16 und somit auch der Aufnahmeraum 10 von einem ringförmigen Mikrowellen-Leiter 30 umgeben. Der Mikrowellen-Leiter 30 ist als Hohlleiter ausgebildet und weist einen rechteckigen Querschnitt auf. An einer sich vorzugsweise parallel zu dem zylindrischen Gehäuse 16 erstreckenden Außenwand 32 des Mikrowellen-Leiters 30 ist eine Zuführleitung 34 vorgesehen. Die Zuführleitung 34 weist beispielsweise ebenfalls einen rechteckigen Querschnitt auf und ist ebenfalls hohl ausgebildet. Über Flansche 36 ist mit der Zuführleitung 34 ein Mikrowellengenerator 38 verbunden. Die vom Mikrowellengenerator 38 erzeugten Mikrowellen werden über den Zuführleiter 34 und eine in der Außenwand 32 des Mikrowellen-Leiters 30 vorgesehene Öffnung 40 in einen Innenraum 42 des hohlen Mikrowellen-Leiters 30 eingeleitet.

Zur Befestigung an einer nicht dargestellten Halterung sind mit dem Mikrowellen-Leiter 30 zwei ringförmige Flansche 44 verbunden.

Über die Flansche 44 ist es ferner möglich zwei oder mehr, insbesondere ringförmige Mikrowellen-Leiter 30 stapelförmig übereinander anzuordnen. Hierbei ist jeder Mikrowellen-Leiter 30 vorzugsweise mit einem eigenen Mikrowellengenerator 38 verbunden.

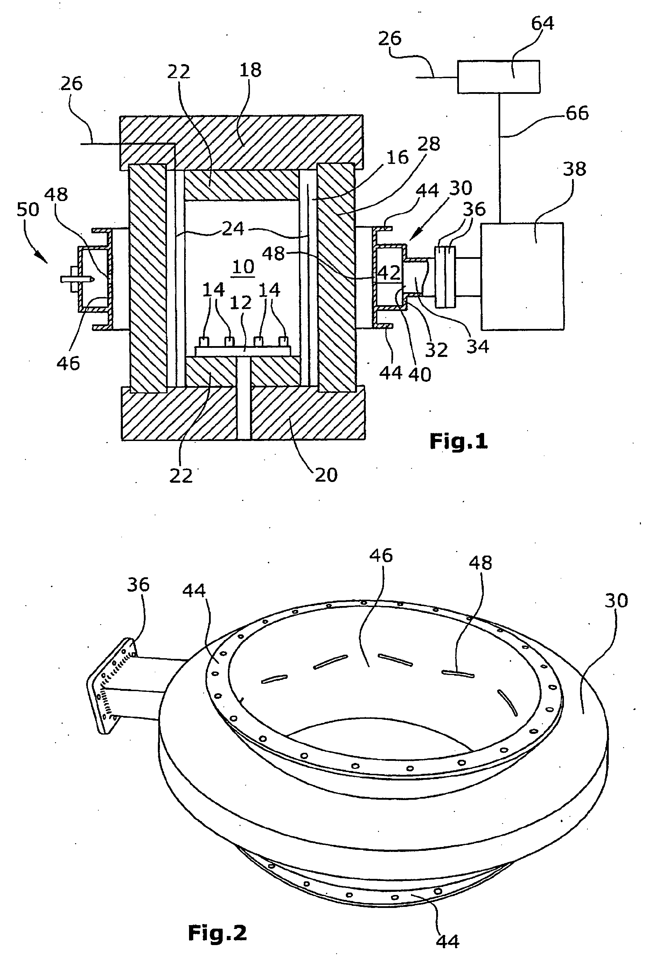

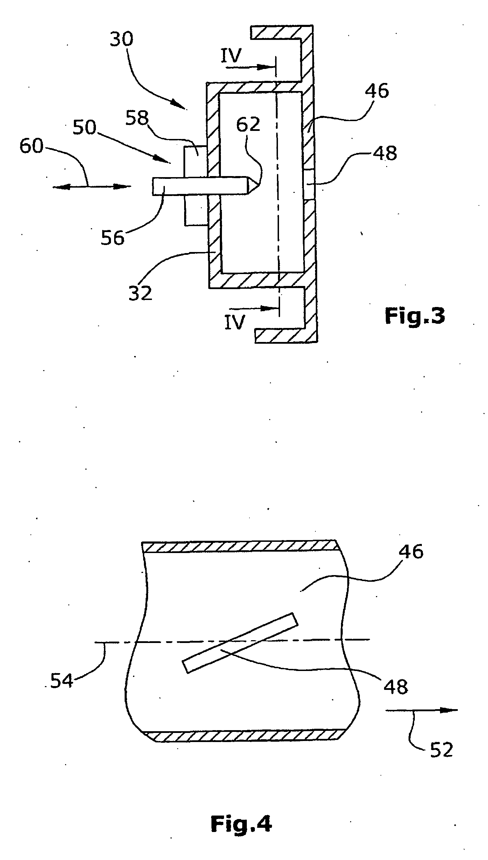

Erfindungsgemäß sind insbesondere am Umfang einer Innenwand 46 des Mikrowellen-Leiters 30 angeordnete Auskoppelschlitze 48 vorgesehen. Die Auskoppelschlitze 48 sind im dargestellten Ausführungsbeispiel Bestandteil eines Auskoppelelements, das zusätzlich eine Einstelleinrichtung 50 aufweist. Die Auskoppelschlitze 48 sind in Umfangsrichtung 52 (Figur 4) in der Innenwand 46 regelmäßig angeordnet. Vorzugsweise weisen sämtliche Auskoppelschlitze dieselbe Länge und dieselbe Breite auf. Bezogen auf eine in Umfangsrichtung 52 verlaufende Längsachse 54 sind die Schlitze 48 vorzugsweise geneigt, wobei die Neigungsrichtung abwechselnd ist (Figur 2). Die Neigungswinkel sind jedoch vorzugsweise bei sämtlichen Schlitzen identisch.

Zur Einstellung der Intensität und/oder der Ausbreitungsrichtung der durch die als Mikrowellenquellen fungierenden Schlitze 48 in Richtung des Aufnahmeraums 10 abgegebenen Mikrowellen ist die Einstelleinrichtung 50 vorgesehen. Diese weist im dargestellten Ausführungsbeispiel ein stabförmiges Einstellelement 56 auf, das über ein Befestigungsmittel 58 an der Außenwand 32 fixiert ist. Der Stab 56 ist in Richtung eines Pfeils 60 verschiebbar, so dass der Abstand zwischen einer Stabspitze 62 und dem Schlitz 48 zur Einstellung der Intensität und/ oder der Ausbreitungsrichtung variiert werden kann. Gegebenenfalls ist der Stab 56 auch verkippbar.

Zur Durchführung des erfindungsgemäßen Verfahrens ist eine Steuereinrichtung 64 vorgesehen, die über die elektrische Leitung 26 mit der Heizeinrichtung 24 sowie über eine Leitung 66 mit dem Mikrowellengenerator 38 verbunden ist. Über die Leitungen 26, 66 können Steuerbefehle an die Heizung 24 bzw. den Mikrowellengenerator 38 übermittelt werden. Die Heizeinrichtung 24 wird über eine Zeit-Temperatur-Regelung geregelt, Hierzu ist innerhalb des Aufnahmeraums 10 ein nicht dargestellte Thermoelement zur Messung der in dem Raum 10 herrschenden Temperatur angeordnet. Insbesondere werden von der Steuereinrichtung 64 die Zeitprofile überwacht. Die Zeitprofile dienen einerseits zum Erreichen der Vor-Sintertemperatur in dem Aufnahmeraum 10 und somit zur zeitlichen Steuerung der Heizeinrichtung 24 und andererseits zur zeitlichen Steuerung des Mikrowellengenerators.

**Patentansprüche**

1. Dental-Sinterofen zum Sintern keramischer Dental-Elemente, mit
einem Aufnahmeraum (10) zur Aufnahme der zu sinternden Dental-Elemente (14), und
einer Heizeinrichtung (24) zur Erwärmung der in dem Aufnahmeraum (10) angeordneten Dental-Elemente (14) auf eine Vor-Sintertemperatur und
einem Mirkowellengenerator (38)
**gekennzeichnet, durch**
einen mit dem Mikrowellengenerator (38) verbundenen, den Aufnahmeraum (10) zumindest teilweise umgebenden Mikrowellen-Leiter (30) mit mehreren Auskoppelelementen (48, 50) zum Auskoppeln von Mikrowellen in Richtung des Aufnahmeraums (10), wobei die Auskoppelelemente (48, 50) an einer in Richtung des Aufnahmeraums (10) weisenden Innenwand (46) des Mikrowellen-Leiters (30) Auskoppelschlitze (48) aufweisen und zumindest ein Teil der Auskoppelelemente (48, 50) eine Einstelleinrichtung (50) zur Einstellung der Intensität und/ oder Ausbreitungsrichtung der Mikrowelle aufweist.

2. Dental-Sinterofen nach Anspruch 1, **dadurch gekennzeichnet, dass** der Mikrowellen-Leiter (30) als insbesondere ringförmiger Hohlleiter ausgebildet ist.

3. Dental-Sinterofen nach Anspruch 1 oder 2, **dadurch gekennzeichnet, dass** der Mikrowellen-Leiter (30) mit einem einzigen Mikrowellengenerator (38), insbesondere über einen Zuführleiter (34) verbunden ist.

4. Dental-Sinterofen nach einem der Ansprüche 1 bis 3, **dadurch gekennzeichnet, dass** die Einstelleinrichtung (50) ein insbesondere senkrecht zum Auskoppelschlitz (48) und vorzugsweise in Richtung des Aufnahmeraums (10) weisenden Stab (56) aufweist.

5. Dental-Sinterofen nach Anspruch 4, **dadurch gekennzeichnet, dass** der Stab (56) zur Abstandsveränderung zum Auskoppelschlitz verschiebbar, insbesondere in einer der Innenwand (46) des Mikrowellen-Leiters (30) gegenüberliegenden Außenwand (32) gehalten ist.

6. Verfahren zum Sintern keramischer Dental-Elemente, unter Verwendung eines Dental-Sinterofens nach einem der Ansprüche 1 bis 5, mit den Schritten:

    - Erwärmen der Dental-Elemente (14) auf Vor-Sintertemperatur mittels einer Heizeinrichtung (24) und
    - Bestrahlen der auf Vor-Sintertemperatur erwärmten Dental-Elemente (14) mit Mikrowellenstrahlung zum Erwärmen der Dental-Elemente auf Sintertemperatur.

7. Verfahren nach Anspruch 6, bei welchem die Heizeinrichtung (24) nach Erreichen der Vor-Sintertemperatur bis zur Erreichung der Sintertemperatur weiter betrieben wird.

8. Verfahren nach Anspruch 6 oder 7, bei welchem die Mikrowellenstrahlung erst ab Erreichen der Vor-Sintertemperatur eingeschaltet wird.

9. Verfahren nach einem der Ansprüche 6 bis 8, bei welchem die Steuerung eines Mikrowellengenerators (38) ausschließlich mittels eines Zeitprofils erfolgt.

**Claims**

1. A dental sintering furnace for sintering ceramic dental elements, comprising
a receiving chamber (10) for receiving the dental elements (14) to be sintered,
a heating unit (24) for heating the dental elements (14) arranged in said receiving chamber (10) to a pre-sintering temperature, and
a microwave generator (38),
**characterized by**
a microwave conductor (30) connected to said microwave generator (38) and at least partially surrounding the receiving chamber (10), said microwave conductor comprising a plurality of decoupling elements (48,50) for decoupling microwaves in the direction of the receiving chamber (10),
said decoupling elements (48,50) comprise decoupling slots (48) on an inner wall (46) of the microwave conductor (30) facing in the direction of the receiving chamber (10) and at least a part of said decoupling elements (48,50) are provided with an adjustment means (50) for setting the intensity and/or the propagation direction of the microwaves.

2. The dental sintering furnace according to claim 1, **characterized in that** said microwave conductor (30) is designed as a particularly annular hollow conductor.

3. The dental sintering furnace according to claim 1 or 2, **characterized in that** said microwave conductor (30) is connected to a sole microwave generator (38), particularly via a feed conductor (34).

4. The dental sintering furnace according to any one of claims 1 to 3, **characterized in that** said adjustment means (50) comprises a rod (56) extending particularly vertically to the decoupling slot (48) and preferably facing in the direction of the receiving chamber (10).

5. The dental sintering furnace according to claim 4, **characterized in that** said rod (56), for changing its distance to the decoupling slot, is held in a displaceable manner, particularly in an outer wall (32) opposite to the inner wall (46) of the microwave conductor (30).

6. A method for sintering ceramic dental elements by use of a dental sintering furnace according to any one of claims 1 to 5, said method comprising the following steps:

   - heating said dental elements (14) to a pre-sintering temperature by a heating unit (24), and
   - irradiating said dental elements (14) heated to the pre-sintering temperature with microwave radiation so as to heat the dental elements to the sintering temperature.

7. The method according to claim 6, wherein, after the pre-sintering temperature has been reached, said heating unit (24) is operated until the sintering temperature has been reached.

8. The method according to claim 6 or 7, wherein the microwave radiation is switched on only when the pre-sintering temperature has been reached.

9. The method according to any one of claims 6 to 8, wherein the control of a microwave generator (38) is performed exclusively by means of a time profile.

## Revendications

1. Four de frittage à usage dentaire destiné à fritter des éléments céramiques à usage dentaire, ledit four de frittage comportant
un espace de réception (10) destiné à recevoir des éléments à usage dentaire (14) à fritter, et
un dispositif de chauffage (24) destiné à chauffer les éléments à usage dentaire (14), disposés dans l'espace de réception (10), à une température de préfrittage et
un générateur de micro-ondes (38)
**caractérisé par**
un guide de micro-ondes (30) qui est relié au générateur de micro-ondes (38), qui entoure l'espace de réception (10) au moins partiellement et qui comporte plusieurs éléments de découplage (48, 50) destinés à découpler des micro-ondes en direction de l'espace de réception (10),
les éléments de découplage (48, 50) comportant des fentes de découplage (48) au niveau d'un bord intérieur (46), dirigé vers l'espace de réception (10), du guide de micro-ondes (30) et au moins une partie des éléments de découplage (48, 50) comportant un dispositif de réglage (50) destiné à régler l'intensité et/ou la direction de propagation des micro-ondes.

2. Four de frittage à usage dentaire selon la revendication 1, **caractérisé en ce que** le guide de micro-ondes (30) est conformé en guide creux notamment annulaire.

3. Four de frittage à usage dentaire selon la revendication 1 ou 2, **caractérisé en ce que** le guide de micro-ondes (30) est relié à un générateur de micro-ondes (38) unique, notamment par le biais d'un guide d'amenée (34).

4. Four de frittage à usage dentaire selon l'une des revendications 1 à 3, **caractérisé en ce que** le dispositif de réglage (50) comporte une barre (56) dirigée notamment perpendiculairement à la fente de découplage (48) et avantageusement vers l'espace de réception (10).

5. Four de frittage à usage dentaire selon la revendication 4, **caractérisé en ce que** la barre (56) est maintenue de manière à pouvoir coulisser afin de modifier la distance à la fente de découplage, notamment dans une paroi extérieure (32) opposée à la paroi intérieure (46) du guide de micro-ondes (30).

6. Procédé de frittage d'éléments céramiques à usage dentaire, en utilisant un four de frittage à usage dentaire selon l'une des revendications 1 à 5, ledit procédé comportant les étapes consistant à :

   - chauffer les éléments à usage dentaire (14) à une température de pré-frittage au moyen d'un dispositif de chauffage (24) et

- irradier les éléments à usage dentaire (14), chauffés à la température de pré-frittage, avec un rayonnement micro-onde afin de chauffer les éléments à usage dentaire à la température de frittage.

7. Procédé selon la revendication 6, dans lequel, après que la température de pré-frittage a été atteinte, le dispositif de chauffage (24) continue de fonctionner jusqu'à ce que la température de frittage soit atteinte.

8. Procédé selon la revendication 6 ou 7, dans lequel le rayonnement micro-onde n'est déclenché qu'une fois que la température de pré-frittage a été atteinte.

9. Procédé selon l'une des revendications 6 à 8, dans lequel la commande d'un générateur de micro-ondes (38) est effectuée exclusivement au moyen d'un profil de temps.

**Fig.1**

**Fig.2**

**Fig.3**

**Fig.4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0713633 A
- US 2007023971 A